# EUROPEAN PATENT SPECIFICATION

(11) **EP 2 714 427 B1**
(45) Date of publication and mention of the grant of the patent: **17.12.2014**
(21) Application number: 12731696.6
(22) Date of filing: 22.05.2012
(51) Int. Cl.: B60C 1/00, C08K 7/04

(54) **HIGH-PERFORMANCE TYRE FOR MOTOR VEHICLE WHEELS**
HOCHLEISTUNGSREIFEN FÜR KRAFTFAHRZEUGRÄDER
PNEUMATIQUE À PERFORMANCES ÉLEVÉES POUR ROUES DE VÉHICULE MOTORISÉ

(30) Priority: 30.05.2011 IT MI20110975; 22.07.2011 US 201161510621 P
(43) Date of publication of application: 09.04.2014
(73) Proprietor: Pirelli Tyre S.p.A., 20126 Milano (IT)
(72) Inventor: NAHMIAS NANNI, Marco, I-20126 Milano (IT); GIANNINI, Luca, I-20126 Milano (IT); LOSTRITTO, Angela, I-20126 Milano (IT)
(74) Representative: Allaix, Roberto
(86) International application number: PCT/IB2012/052554
(87) International publication number: WO 2012/164436

(56) References cited:
- EP-A1- 2 179 865
- WO-A1-2004/056586
- WO-A1-2007/062671
- WO-A1-2009/080091
- WO-A2-2010/069341
- JP-A- 11 246 707
- JP-A- 59 126 442
- JP-A- 2006 131 718
- US-A1- 2003 144 401

## Description

### FIELD OF THE INVENTION

The present invention relates to a tyre for motor vehicle wheels, in particular a high-performance tyre for high-powered two-wheeled motor vehicles, more particularly a tyre for applications that require high operating speeds and/or extreme driving conditions.

### PRIOR ART

A recently observed trend is the marketing of more and more powerful motorcycles for road use. The new sports-style motorcycles, approved for road use, with engine sizes of 600 cm³ or more, currently develop power of the order of 80-90 kW or more.

The tyres used on the aforementioned vehicles must be able to guarantee an optimum road grip in all driving conditions and especially in phases of braking, of leaning over when going into a bend and of acceleration when coming out of said bend (straightening up from the lean).

Document WO 11/012944 in the applicant's name describes a motorcycle tyre for road use.

Document EP 718122 in the applicant's name describes a motorcycle tyre comprising an auxiliary supporting element interposed between the carcass ply and the belt structure, said element being made in the form of an elastomeric layer containing short aramid fibres whose purpose is to increase the stretchability characteristics of the material. In this document it is asserted that for increasing the stretchability characteristics, the known methods for endowing an unvulcanized elastomeric material with good mechanical strength properties, based on the use of pre-crosslinked polymers or of crystalline polymers or of textile or mineral fibres, have not given satisfactory results: in fact they have been shown to have various disadvantages, in particular a considerable decrease in grip, without increasing, but rather often reducing, the stretchability.

### SUMMARY OF THE INVENTION

The applicant has observed that in the extreme use to which motorcycle tyres are sometimes submitted, both tyres are subjected, in different manoeuvres, to stresses of the circumferential, transverse and combined type, and to strains of a considerable magnitude.

The applicant has moreover noted that the rear tyres exchange stresses of a higher magnitude with the ground, in the various manoeuvres, compared to the front tyres.

The applicant has observed that the elastomeric layer or thin sheet arranged between the carcass structure and the belt structure would appear to have not only a function of auxiliary supporting element in the design and building of a tyre blank, but also a structural function of support and transfer of stresses in the transition between the belt structure and the carcass structure.

Starting from these observations, the applicant assumed that such an element, typically used in its function of structural support, could also improve the characteristics of structure and function at high speed and/or in extreme driving conditions of a high-performance motorcycle tyre.

The applicant has found that it is possible to obtain tyres that have improved performance during use in extreme conditions, by applying, between the carcass structure and the belt structure, at least one layer of an elastomeric material comprising inorganic fibres of nanometric dimensions, preferably inorganic fibres consisting of magnesium and/or aluminium silicates.

The applicant has found, surprisingly, that the addition of inorganic fibres of nanometric dimensions in the layer of elastomeric material, or thin sheet, arranged between the carcass structure and the belt structure, resulted in an increase in tyre performance in conditions of extreme use, in particular with respect to driving stability, and more particularly the stability of the rear of the motorcycle.

This is all the more surprising bearing in mind that the applicant had observed that although the addition of inorganic fibres of nanometric dimensions endowed the elastomeric material with better processability and imparted good mechanical properties, it caused an appreciable decrease in dynamic shear modulus on increasing the dynamic strain relative to an elastomeric material reinforced with Kevlar fibres.

This decrease is typically undesirable as it may be associated with a reduction of tyre performance in relation to the stability of the motorcycle. All the more so, this decrease meant that the elastomeric material could be regarded as unsuitable for use in an element of small thickness and therefore subject to larger strains.

The applicant noticed that, in addition to an appreciable decrease in dynamic shear modulus on increasing the dynamic strain, the elastomeric material reinforced with the aforementioned inorganic fibres of magnesium and/or aluminium silicates of nanometric dimensions displayed greater hysteresis at high temperatures than a material reinforced with Kevlar fibres, thus making the material rather unsuitable for use in high-performance motorcycle tyres, all the more so because the applicant was moreover convinced that mineral fibres, like other reinforcements, would not be particularly suitable for increasing the stretchability of the thin sheet and its adhesiveness, which were regarded as desirable characteristics in this elastomeric layer.

The applicant carried out tests on tyres provided with a thin sheet reinforced with the aforementioned fibres and found, surprisingly, improved performance in stability and controllability, especially of the rear tyres.

Therefore, according to a first aspect, the present invention relates to a tyre for motorcycle wheels, comprising:
- a carcass structure comprising at least one carcass layer,
- a belt structure applied in a radially outer position with respect to the carcass structure,
- a tread band applied in a radially outer position with respect to said belt structure; and
- at least one elastomeric material layer arranged between said carcass structure and said belt structure;
in which said at least one elastomeric material layer comprises inorganic fibres of magnesium and/or aluminium silicates of nanometric dimensions.

In the present description, "fibre" means an elongated element having one dimension (length) much greater than the diameter of the cross section and the expression "nanometric dimensions", referring to the inorganic fibres, means that the inorganic fibres have a diameter under 500 nm.

According to a preferred embodiment, said elastomeric material comprises (a) a diene elastomeric polymer and (b) inorganic fibres having a diameter under 100 nm.

Advantageously, said inorganic fibres have a diameter between 1 and 100 nm, more preferably between 5 and 50 nm.

Preferably, said inorganic fibres have a length under 10 µm, more preferably between 0.2 and 10 µm.

Advantageously, the inorganic fibres used in the present invention are selected from the group consisting of fibres of magnesium and/or aluminium silicates, for example, sepiolite fibres, fibres of palygorskite (also known as attapulgite) or mixtures thereof. The inorganic sepiolite fibres are particularly preferred.

According to a preferred embodiment, said inorganic fibres are present in the elastomeric material in an amount from 1 phr to 20 phr, preferably from 3 phr to 15 phr.

According to a preferred embodiment, said at least one elastomeric material layer has a thickness under 2 mm, preferably between 0.1 mm and 1.5 mm, even more preferably between 0.1 and 0.5 mm.

According to a preferred embodiment, said elastomeric material further comprises (c) a carbon black reinforcing filler.

According to a preferred embodiment, said elastomeric material further comprises (d) a silane coupling agent.

For the purposes of the present description and of the claims given hereafter, the term "phr" denotes the parts by weight of a specified component of the elastomeric material per 100 parts by weight of the diene elastomeric polymer.

Advantageously, the inorganic fibres are treated with a compatibilizing agent.

According to a preferred embodiment, said compatibilizing agent can be selected, for example, from quaternary ammonium or phosphonium salts having the general formula (I) 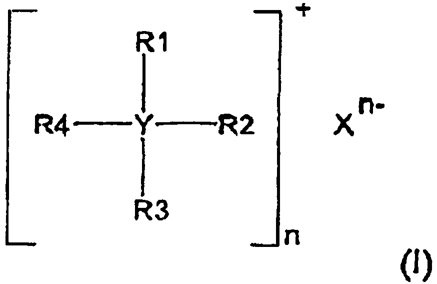 in which:
Y represents N or P;
R1, R2. R3 and R4, which may be identical or different, represent a linear or branched C1-C20 alkyl or hydroxyalkyl group; a linear or branched C1-C20 alkenyl or hydroxyalkenyl group; a group -R5-SH or-R5-NH₂, in which R5 represents a linear or branched C1-C20 alkylene group; a C6-C18 aryl group; a C7-C20 aralkyl or alkaryl group; a C5-C18 cycloalkyl group, said cycloalkyl group optionally containing heteroatoms such as oxygen, nitrogen or sulphur;
Xⁿ- represents an anion such as the chlorine ion, sulphate ion or phosphate ion;
n represents 1, 2 or 3.

The treatment of the inorganic fibres with the compatibilizing agent is carried out to obtain increased dispersion of the silicates in the elastomer matrix. The silicate, typically hydrophilic, is made organophilic by exchange of alkaline cations for example with relatively long chains, of quaternary alkyl ammonium cations, changing the surface polarity of the silicate. Further details are described, for example, in patents US 4,136,103; US 5,747,560 or US 5,952,093. An example of inorganic fibres, which can be used according to the present invention and is commercially available, is the product known by the name Pangel B5, supplied by Tolsa Group (http://www.tolsa.com/).

According to a preferred embodiment, the diene elastomeric polymer (a) that can be used in the present invention can be selected from those commonly used in sulphur-curable elastomeric materials, which are particularly suitable for making tyres, i.e. from elastomeric polymers or copolymers with an unsaturated chain having a glass transition temperature (Tg) generally below 20°C, preferably in the range from 0°C to -110°C. These polymers or copolymers can be of natural origin or can be obtained by solution polymerization, emulsion polymerization or gas-phase polymerization of one or more conjugated diolefins, optionally mixed with at least one comonomer selected from monovinylarenes and/or polar comonomers in an amount not greater than 60 wt.%.

The conjugated diolefins generally contain from 4 to 12, preferably from 4 to 8 carbon atoms and can be selected for example from the group comprising: 1,3-butadiene, isoprene, 2,3-dimethyl-1,3-butadiene, 1,3-pentadiene, 1,3-hexadiene, 3-butyl-1,3-octadiene, 2-phenyl-1,3-butadiene or mixtures thereof. 1,3-Butadiene and isoprene are particularly preferred.

Monovinylarenes that can optionally be used as comonomers generally contain from 8 to 20, preferably from 8 to 12 carbon atoms and can be selected for example from: styrene; 1-vinylnaphthalene; 2-vinylnaphthalene; various alkyl, cycloalkyl, aryl, alkaryl or aralkyl derivatives of styrene, for example α-methylstyrene, 3-methylstyrene, 4-propylstyrene, 4-cyclohexylstyrene, 4-dodecylstyrene, 2-ethyl-4-benzylstyrene, 4-p-tolylstyrene, 4-(4-phenylbutyl)styrene, or mixtures thereof. Styrene is particularly preferred.

Polar comonomers that can optionally be used can be selected for example from: vinyl pyridine, vinyl quinoline, esters of acrylic acid and of alkylacrylic acid, nitriles, or mixtures thereof, for example methyl acrylate, ethyl acrylate, methyl methacrylate, ethyl methacrylate, acrylonitrile or mixtures thereof.

Preferably, the diene elastomeric polymer (a) that can be used in the present invention can be selected for example from: cis-1,4-polyisoprene (natural or synthetic, preferably natural rubber), 3,4-polyisoprene, polybutadiene (in particular polybutadiene with high 1,4-cis content), optionally halogenated isoprene/isobutene copolymers; 1,3-butadiene/acrylonitrile copolymers, styrene/1,3-butadiene copolymers, styrene/isoprene/1,3-butadiene copolymers, styrene/1,3-butadiene/acrylonitrile copolymers, or mixtures thereof.

According to a preferred embodiment, said elastomeric material comprises at least 10 wt.%, preferably between 20 wt.% and 100 wt.% of natural rubber, relative to the total weight of said at least one diene elastomeric polymer (a).

The aforementioned elastomeric material can optionally comprise at least one elastomeric polymer of one or more monoolefins with an olefinic comonomer or derivatives thereof (a'). The monoolefins can be selected from: ethylene and α-olefins generally containing from 3 to 12 carbon atoms, for example propylene, 1-butene, 1-pentene, 1-hexene, 1-octene or mixtures thereof. The following are preferred: copolymers of ethylene and an α-olefin, optionally a diene; homopolymers of isobutene or copolymers thereof with a small amount of a diene, which are optionally at least partially halogenated. The diene optionally present generally contains from 4 to 20 carbon atoms and is preferably selected from: 1,3-butadiene, isoprene, 1,4-hexadiene, 1,4-cyclohexadiene, 5-ethylidene-2-norbornene, 5-methylene-2-norbornene, vinyl norbornene or mixtures thereof. Among these, the following are particularly preferred: ethylene/propylene copolymers (EPR) or ethylene/propylene/diene copolymers (EPDM); polyisobutene; butyl rubbers; halobutyl rubbers, in particular chlorobutyl or bromobutyl rubbers; or mixtures thereof.

It is also possible to use a diene elastomeric polymer (a) or an elastomeric polymer (a') functionalized by reaction with suitable terminating agents or coupling agents. In particular, the diene elastomeric polymers obtained by anionic polymerization in the presence of an organometallic initiator (in particular an organolithium initiator) can be functionalized by reacting the residual organometallic groups derived from the initiator with suitable terminating agents or coupling agents, for example imines, carbodiimides, alkyl tin halides, substituted benzophenones, alkoxysilanes or aryloxysilanes.

As described above, said elastomeric material preferably further comprises at least one carbon black reinforcing filler (c).

According to a preferred embodiment, the carbon black reinforcing filler (c) that can be used in the present invention can be selected from those having a surface area not less than 20 m²/g (determined from STSA - statistical thickness surface area according to ISO 18852:2005).

According to a preferred embodiment, said carbon black reinforcing filler (c) is present in the elastomeric material in an amount between 0.1 phr and 120 phr, preferably between 20 phr and 90 phr.

As described above, said elastomeric material preferably further comprises at least one silane coupling agent (d).

According to a preferred embodiment, the silane coupling agent (d) that can be used in the present invention can be selected from those having at least one hydrolysable silane group, which can be identified, for example, by the following general formula (II):

(R)₃Si-CₙH₂ₙ-X (II)

where the groups R, which may be identical or different, are selected from: alkyl, alkoxy or aryloxy groups or halogen atoms, provided that at least one of the groups R is an alkoxy or aryloxy group; n is an integer between 1 and 6 inclusive; X is a group selected from: nitroso, mercapto, amino, epoxide, vinyl, imide, chloro, -(S)ₘCₙH₂ₙ-Si-(R)₃ or -S-COR, where m and n are integers between 1 and 6 inclusive and the groups R are defined as above.

Among the silane coupling agents, those particularly preferred are bis(3-triethoxysilylpropyl) tetrasulphide and bis(3-triethoxysilylpropyl) disulphide. Said coupling agents can be used as such or as a suitable mixture with an inert filler (for example carbon black) to facilitate their incorporation in the elastomeric material.

According to a preferred embodiment, said silane coupling agent (d) is present in the elastomeric material in an amount between 0.01 phr and 10 phr, preferably between 0.5 phr and 5 phr.

At least one additional reinforcing filler can advantageously be added to the aforementioned elastomeric material, in an amount generally between 0.1 phr and 120 phr, preferably between 20 phr and 90 phr. The reinforcing filler can be selected from those commonly used for crosslinked products, in particular for tyres, for example silica, alumina, aluminosilicates, calcium carbonate, kaolin or mixtures thereof.

The silica that can be used in the present invention can generally be a pyrogenic silica or preferably a precipitated silica, with a BET surface area (measured according to standard ISO 5794/1) between 50 m²/g and 500 m²/g, preferably between 70 m²/g and 200 m²/g.

The elastomeric material can advantageously incorporate a silane coupling agent (d) that is able to interact with the silica optionally present as reinforcing filler and/or the silicates and bind them to the diene elastomeric polymer during vulcanization. Examples of silane coupling agents (d) that can be used were described above.

Preferably, the elastomeric material of the tread band comprises at least one diene elastomeric polymer and at least one reinforcing filler selected from those commonly used in sulphur-curable elastomeric materials, which are particularly suitable for making tyres, for example those described above with reference to said at least one elastomeric material layer.

The elastomeric materials mentioned above, both for said at least one elastomeric material layer and for the tread band, can be vulcanized according to the known techniques, in particular with sulphur-based vulcanizing systems commonly used for diene elastomeric polymers. For this purpose, after one or more stages of thermomechanical processing, a sulphur-based vulcanizing agent is incorporated, together with vulcanization accelerators, in the materials. In the final processing stage, the temperature is generally kept below 120°C and preferably below 100°C, in order to avoid any undesirable scorching.

The vulcanizing agent used most advantageously is sulphur, or sulphur-containing molecules (sulphur donors), with accelerators and activators known by persons skilled in the art.

The activators that are particularly effective are zinc compounds and in particular ZnO, ZnCO₃, zinc salts of saturated or unsaturated fatty acids containing from 8 to 18 carbon atoms, for example zinc stearate, which are preferably formed *in situ* in the elastomeric material from ZnO and fatty acid, such as BiO, PbO, Pb₃O₄, PbO₂, or mixtures thereof.

The accelerators that are commonly used can be selected from: dithiocarbamates, guanidine, thiourea, thiazoles, sulphenamides, thiurams, amines, xanthates or mixtures thereof.

Said elastomeric materials can comprise other commonly used additives, selected on the basis of the specific application for which the composition is intended. For example, the following can be added to said materials: antioxidants, anti-ageing agents, plasticizers, adhesives, anti-ozone agents, modifying resins, or mixtures thereof.

In particular, for further improvement of processability, a plasticizer can be added to said elastomeric material, generally selected from mineral oils, vegetable oils, synthetic oils or mixtures thereof, for example aromatic oil, naphthenic oil, phthalates, soya oil or mixtures thereof. The amount of plasticizer is generally between 0 phr and 70 phr, preferably between 5 phr and 30 phr.

The aforementioned elastomeric materials can be prepared by mixing together the polymeric components with the reinforcing filler and with the other additives optionally present according to the techniques known by a person skilled in the art. Mixing can be carried out, for example, using an open mixer of the "open-mill" type or an internal mixer of the type with tangential rotors (Banbury) or with intermeshing rotors (Intermix), or in continuous mixers of the Ko-Kneader type (Buss) or of the twin-screw or multiscrew type.

The following description refers to the appended drawings, which are supplied purely for purposes of illustration and therefore are not limiting, in which:
- Fig. 1 shows a tyre for motorcycle wheels in half section perpendicular to the equatorial plane X-X;
- Fig. 2 is a photograph illustrating a comparative test between test specimens of elastomer compound;
- Fig. 3 shows a stress/strain diagram comparing two samples of vulcanized elastomer compound.

"Motorcycle tyre" means a tyre having a high ratio of transverse curvature f/C, typically greater than or equal to 0.20, preferably in the range between 0.20 and 0.80, able to reach high camber angles while the motorcycle is cornering.

"Camber angle" means the angle between the equatorial plane of the tyre mounted on the motorcycle wheel and a plane orthogonal to the road surface.

The transverse curvature is normally defined by the value of the "curvature ratio", the ratio of the distance (f) between the radially highest point of the tread band and the maximum chord (C) of the tyre, to the same maximum chord of the tyre, in a cross section thereof.

"Equatorial plane" of the tyre means a plane perpendicular to the rotation axis of the tyre that divides the tyre into two symmetrically identical parts.

"Circumferential" direction means a direction generally following the direction of rotation of the tyre, or slightly inclined relative to the direction of rotation of the tyre.

"Transverse" or "axial" direction or "axially" means a direction parallel to or slightly inclined relative to the rotation axis of the tyre.

"Radial" direction or "radially" means a direction substantially orthogonal to the rotation axis of the tyre.

In a preferred embodiment, the motorcycle tyre is intended to be mounted on the rear wheel having chord dimensions substantially between 160 and 210 mm.

Preferably the distance (f) between the radially outer point of the tread and the line passing through the laterally opposite ends of said tread of the rear tyre is substantially between 50 and 80 mm. Preferably for a rear tyre the ratio of transverse curvature (f/C) is substantially between 0.20 and 0.50, even more preferably between 0.25 and 0.35. Preferably, the total height/chord ratio (H/C) is substantially between 0.5 and 0.7.

In a preferred embodiment, the tyre is intended to be mounted on the motorcycle front wheel having chord dimensions substantially between 110 and 130 mm.

Preferably the distance (f) between the radially outer point of the tread and the line passing through the laterally opposite ends of said tread of the front tyre can be substantially between 45 and 65 mm. Preferably, the transverse curvature/chord ratio (f/C) can be substantially between 0.35 and 0.70, even more preferably between 0.35 and 0.60. Preferably, the (total height)/chord ratio (H/C) is substantially between 0.6 and 0.9.

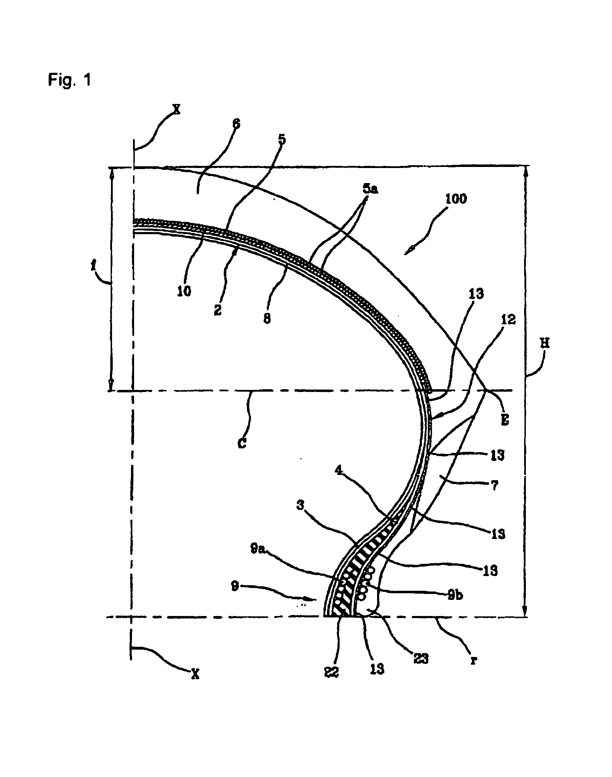

Referring to Fig. 1, 100 denotes a motorcycle tyre overall, comprising a carcass structure formed by at least one carcass layer 2. The carcass layer 2 is designed according to a substantially toroidal configuration and engages, by its opposing circumferential edges, with at least one annular reinforcing structure 9, so as to form a structure usually identified by the name "bead".

In the embodiment depicted in Fig. 1, the carcass layer 2 comprises a first plurality of strips 3 and a second plurality of strips 4 of elastomeric material, comprising reinforcing elements, arranged alternately along the profile of a structure with substantially toroidal development, according to an inverted U configuration so that they are adjacent in the rim zone and substantially superposed in the bead zone.

The reinforcing elements included in the carcass layer 2 preferably comprise textile cords selected from those usually employed for making tyre carcasses, for example nylon, rayon, aramid, PET, PEN, with an individual thread having a diameter between 0.35 mm and 1.5 mm. The reinforcing elements in the carcass layer 2 are preferably arranged radially, or at an angle between 70° and 110°, more preferably between 80° and 100°, relative to the equatorial plane Y-Y. In the embodiment shown in Fig. 1, the annular reinforcing structure 9 has at least one annular insert made of an elongated element, preferably metallic, coated at least partially with elastomeric material arranged in substantially concentric coils, each coil being defined either by a continuous spiral section or by concentric rings formed by respective metallic cords.

Preferably, as shown in Fig. 1, two annular inserts 9a and 9b are provided, and a filler 22 of elastomeric material in an axially outer position with respect to the first annular insert 9a. The second annular insert 9b is arranged, still as shown in Fig. 1, in an axially outer position with respect to the strips 4. Finally in an axially outer position with respect to said second annular insert 9b, and not necessarily in contact with it, a further filler 23 is provided, which completes the construction of the annular reinforcing structure 9.

In an alternative embodiment, not shown, a carcass layer 2 has its opposite lateral edges associated with conventional annular reinforcing structures called bead wires. The association between the carcass layer and bead wires is in this case achieved by folding the opposite lateral edges of the carcass layer around said bead wires, to form so-called carcass turn-up. The carcass structure can also comprise several carcass layers.

A belt structure 5 is applied circumferentially, in a radially outer position, on the carcass structure, a tread band 6 is superposed circumferentially on said belt structure, and as a result of a moulding operation carried out simultaneously with vulcanization of the tyre, longitudinal and/or transverse grooves can be obtained in the tread band, arranged to define a desired tread pattern.

A layer or thin sheet 10 of elastomeric material is arranged between the belt structure 5 and the carcass structure. This layer 10 is made of an elastomeric material reinforced with inorganic fibres of magnesium and/or aluminium silicates, having nanometric dimensions. The layer 10 can have a uniform thickness. Alternatively, layer 10 can have a thickness that varies in the axial direction. For example, layer 10 can have a greater thickness near its axially outer edges with respect to the central (rim) zone.

In the embodiment in Fig. 1, said layer or thin sheet 10 extends over a surface substantially corresponding to the development surface of said belt structure 5.

In a further embodiment, an additional layer or thin sheet of elastomeric material according to the present invention (not shown in Fig. 1) can be placed between said belt structure 5 and said tread band 6, said additional layer or thin sheet preferably extending over a surface substantially corresponding to the development surface of said belt structure 5.

The tyre 100 can comprise a pair of sidewalls 7 applied laterally on opposite sides of said carcass structure.

In the case of tubeless tyres, a layer of rubber 8, generally called "liner", which supplies the necessary impermeability to the air for inflating the tyre, can also be provided in a radially inner position with respect to the carcass structure 2.

The belt structure 5 preferably comprises rubber-coated cords, arranged substantially parallel and side by side to form a plurality of coils 5a. These coils are oriented substantially in the circumferential direction (typically at an angle between 0° and 5°), this direction usually being called "at zero degrees" referring to its disposition relative to the equatorial plane X-X of the tyre.

Preferably, the belt structure 5 comprises windings axially side by side of a single cord, or of a strip of rubberized fabric comprising cords axially side by side, preferably up to five, wound in a spiral.

Preferably, the cords of the belt structure 5 are metallic cords. Even more preferably, said cords are made from wires of high-carbon steel, i.e. steel wires with a carbon content above 0.7-0.8%.

Preferably, the cords of the belt structure 5 are metallic cords of steel of the high-elongation (HE) type. In particular, these high-elongation (HE) cords have a load-extension diagram comprising a curved portion positioned between two substantially rectilinear portions having different slope relative to the axes of the diagram.

These cords can for example consist of a certain number of strands, from one to five, preferably between three and four, each strand consisting of a certain number of individual metallic filaments, from two to ten, preferably between four and seven. The individual filaments typically have a diameter greater than 0.10 mm, preferably between 0.12 and 0.35 mm. The filaments in the strands and the strands in the cord are wound together helically, preferably in the same sense, with winding pitches the same or also different for the wires and for the strands.

In an alternative design (not shown in Fig. 1), the belt structure 5 can comprise at least two layers that are radially superposed, each consisting of elastomeric material reinforced with cords (typically textile) arranged parallel to one another. The layers are arranged in such a way that the cords of the first belt layer are oriented obliquely relative to the equatorial plane of the tyre, while the cords of the second layer also have oblique orientation, but symmetrically crossed relative to the cords of the first layer, to form the so-called "crossed belt".

In this case, the cords of the belt structure are generally textile cords, for example textile cords of synthetic fibre, for example nylon, rayon, PEN, PET, preferably of high-modulus synthetic fibre, in particular aramid fibre (for example Kevlar® fibres). Alternatively, hybrid cords can be used, comprising at least one low-modulus thread, i.e. not above about 15 000 N/mm² (for example nylon or rayon), intertwined with at least one high-modulus thread (for example Kevlar®), i.e. not below 25 000 N/mm².

Building of the tyre 100 as described above can be carried out by assembling respective semifinished products on a building drum, not shown, using at least one assembling device.

At least some of the components intended to form the carcass structure of the tyre can be constructed and/or assembled on the building drum. More particularly, the building drum can receive first any liner, and then the carcass structure and then the thin sheet or elastomeric layer.

Preferably the thin sheet or elastomeric layer can be assembled together with the belt structure.

Next, devices that are not shown engage with one of the annular anchoring structures coaxially around each of the ends, position an outer sleeve comprising the belt structure and the tread band in position coaxially centred around the cylindrical carcass sleeve and form the carcass sleeve according to a toroidal configuration by radial expansion of the carcass structure, so that it is applied against a radially internal surface of the outer sleeve.

Following building of the raw tyre, an operation of moulding and final vulcanization is carried out for structural stabilization of the tyre by crosslinking the elastomer compound as well as impressing a desired tread pattern on the tread band and impressing any distinctive graphical symbols to correspond to the sidewalls.

According to a preferred embodiment, said layer or thin sheet 10 of elastomeric material is formed by a plurality of windings of an elongated continuous element.

The present invention will be further illustrated below by means of a number of examples of preparation, which are supplied purely for purposes of illustration and without any limitation of this invention.

### EXAMPLE 1

The elastomeric materials shown in Table 1 were prepared as follows (the amounts of the various components are given in phr).

All of the components, except sulphur, accelerator (TBBS), retarder (PVI) and HMMM, were mixed in an internal mixer (model Pomini PL 1.6) for about 5 minutes (1st step). As soon as the temperature reached 145 ± 5°C, the elastomeric material was discharged. The sulphur, accelerator (TBBS), retarder (PVI) and HMMM were added and mixing was carried out in an open roller mixer (2nd step).

**TABLE 1**

| SAMPLE | 1 (*) | 2 |
|---|---|---|
| 1st STEP | | |
| NR | 100 (**) | 100 |
| CB | 56 | 56 |
| Silane | 1.00 | 1.00 |
| Kevlar | 2.75 (**) | - |
| Pangel B5 | - | 8.00 |
| Zinc oxide | 6.50 | 6.50 |
| Mineral oil | 2.00 | 2.00 |
| Stearic acid | 0.80 | 0.80 |
| 6PPD | 2.00 | 2.00 |
| Resorcinol | 1.88 | 1.88 |

| 2nd STEP | | |
|---|---|---|
| HMMM | 5.00 | 5.00 |
| CBS | 0.50 | 0.50 |
| DCBS | 0.75 | 0.75 |
| PVI | 0.15 | 0.15 |
| Curing agent | 3.50 | 3.50 |

| | | |
|---|---|---|
| (*): comparison (**): The Kevlar was introduced as Kevlar pulp, consisting of 2.75 phr of Kevlar fibres and 9.25 phr of NR for a total of 100 phr of NR in the compound | | |

- NR:: natural rubber, SMR-GP, Lee Rubber;
- CB:: carbon black N375, Cabot;
- Silane:: 50% bis(3-triethoxysilylpropyl) tetrasulphide to 50% carbon black, X50S, Degussa-Huls;
- Kevlar:: Kevlar pulp latex MB 23%, DuPont comprising fibrillated aramid fibres having a configuration with a main stem of length between 0.5 mm and 1.6 mm, typically length of about 0.9 mm and a diameter of about 16 µm;
- Pangel B5:: sepiolite modified with quaternary-ammonium salt at 20 wt.%, Tolsa Group, fibres with length between 0.2 µm and 2 µm and diameter between 5 nm and 30 nm;
- Mineral oil:: MES (Mild Extraction Solvate), ENI Spa;
- 6PPD:: N-(1,3-dimethylbutyl)-N'-phenyl-p-phenylene diamine, Chemture Corporation;
- Resorcinol:: resorcinol (80%) dispersed in polymer binder, Rhenogran Resorcinol-80/GE 1323, Rhein Chemie;
- HMMM:: hexamethoxymethylmelamine (65%) on inert support, Cyrez 964 P.C., Cytec;
- CBS:: N-cyclohexyl-2-benzothiazyl-sulphenamide, Vulkacit® CZ/EGC, Lanxess
- DCBS:: benzothiazyl-2-dicyclohexyl-sulphenamide, Vulkacit® DZ/EGC, Bayer
- PVI:: cyclohexyl-thiophthalimide, Santogard PVI, Flexsys
- Curing agent:: sulphur, Redball Superfine, International Sulphur Inc.

Rheometric analysis was performed with a Monsanto MDR rheometer at 170°C for 10 minutes, with an oscillation frequency of 1.66 Hz (100 oscillations per minute) and an amplitude of ± 0.5°. The results are given in Table 2, where ML represents the minimum torque, and MH represents the maximum torque.

The static mechanical properties according to standard ISO 37:2005 were measured at different elongations (50%, 100%) on samples of the aforementioned elastomeric materials, vulcanized at 170°C for 10 minutes. The results obtained are given in Table 2.

The linearity, however, was determined taking into account the ratio of the static loads at two different elongations, 50% and 100% of strain. The ratio thus describes the course of the curve in its initial part.

The hardness in degrees IRHD (at 23°C) was measured according to standard ISO 48:2007, on samples of the aforementioned elastomeric materials, vulcanized at 170°C for 10 minutes.

The dynamic mechanical properties were found using a Monsanto R.P.A. 2000 rheometer according to the following method: cylindrical test specimens with weights in the range from 4.5 g to 5.5 g were obtained by punching from the crosslinked elastomeric composition of samples 1 and 2 (vulcanized at 170°C for 10 min) and their dynamic storage modulus in shear (G') was measured at 70°C, frequency 10 Hz, strain 0.5% and 10%. The Payne effect was evaluated from the difference between the moduli (G') at the two percentage strains stated above.

Table 2 also shows the dynamic mechanical properties measured using an Instron dynamic tester in tension-compression mode according to the following methods. A test piece of crosslinked material having a cylindrical shape (length = 25 mm; diameter = 12 mm), preloaded in compression up to a longitudinal strain of 10% relative to the initial length and held at the specified temperature (23°C or 70°C) throughout the test was subjected to a dynamic sinusoidal stress having an amplitude of ± 3.3% relative to the length under pre-loading, with a frequency of 10 Hz. The dynamic mechanical properties are expressed in terms of values of dynamic elastic modulus (E') and tan delta (loss factor). The value of tan delta is calculated as the ratio of the viscous modulus (E") to the elastic modulus (E'), both being determined with the aforementioned dynamic measurements.

**Table 2**

| SAMPLE | 1 (*) | 2 |
|---|---|---|
| ML [dN m] | 2.54 | 3.10 |
| MH [dN m] | 31.6 | 33.65 |
| STATIC MECHANICAL PROPERTIES | | |
| Modulus 50% (MPa) | 6.60 | 3.71 |
| Modulus 100% (MPa) | 7.30 | 6.24 |
| Elongation at break (%) | 294.8 | 355.4 |

| LINEARITY | | |
|---|---|---|
| Ratio Modulus 100% / Modulus 50% | 1.11 | 1.68 |

| HARDNESS | | |
|---|---|---|
| IRHD (23°C) | 83.4 | 87.3 |

| DYNAMIC MECHANICAL PROPERTIES | | |
|---|---|---|
| E'(23°C) (MPa) | 15.95 | 18.90 |
| E'(70°C) (MPa) | 13.21 | 15.36 |
| tan delta (23°C) | 0.201 | 0.192 |
| tan delta (70°C) | 0.146 | 0.162 |
| G'0.5% | 4.92 | 9.71 |
| G'10% | 1.90 | 2.67 |
| Payne ΔG' (0,5%-10%) | 3.02 | 7.04 |

| | | |
|---|---|---|
| (*): comparison | | |

As can be seen from the data in Table 2, introduction of the sepiolite filler gives, despite a decrease in the static mechanical properties of the resultant compound, an increase in the elongation at break, and an increase in the dynamic mechanical properties and hardness.

The significant improvement in dynamic properties is particularly relevant to tyre performance.

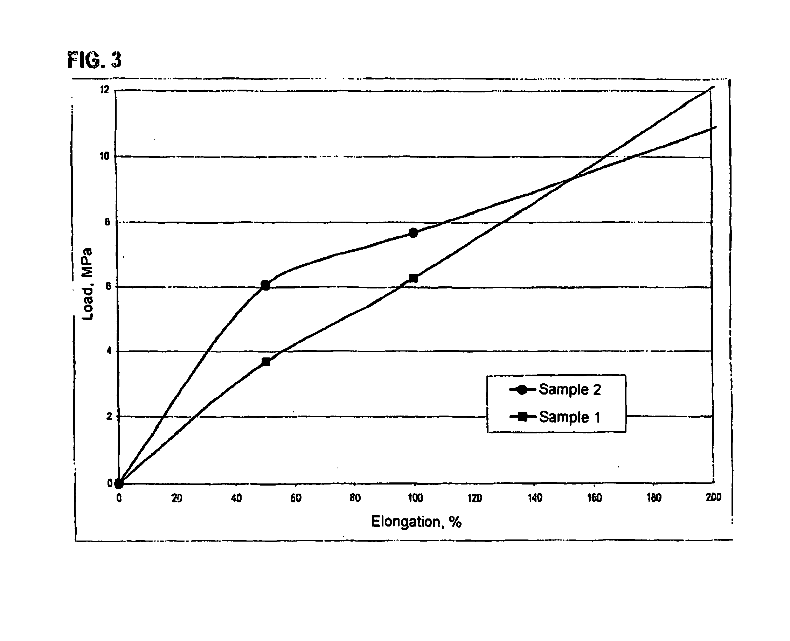

However, the elastomeric material 2 is found to have a strong dependence of the dynamic modulus on the strain amplitude, and it is noted in particular that the dynamic shear modulus decreases considerably with increase in dynamic strain. A surprising linearity is observed in the stress/strain curve of the elastomeric material 2 of the invention, shown by a ratio between the moduli at different strain (respectively 50% and 100%) greater than 1.5, whereas the elastomeric material 1 shows a stress/strain curve with a highly non-linear increase, as is also shown in Fig. 3.

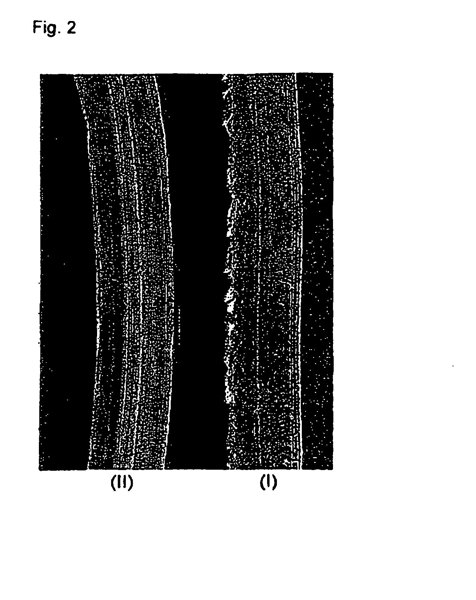

Fig. 2 is a photograph illustrating the difference in appearance of test specimens obtained with elastomeric materials 1 and 2 using a laboratory extruder equipped with Garvey extrusion dies according to ASTM technical standard D2230.

Fig. 2 clearly shows the greater surface roughness of specimen (I) obtained from the comparative elastomeric material 1 and the more jagged edge of said specimen. Specimen (II) obtained from the elastomeric material 2 of the invention shows a definite improvement of both characteristics.

The applicant found that the better processability of the elastomeric material guarantees lower surface roughness of the semifinished product comprising said elastomeric material, which is reflected in better reproducibility of the thin sheet made with this semifinished product, with consequent reduction of waste, increase in productivity and greater constancy and uniformity of tyre performance during use.

### EXAMPLE 2

Rear tyres were made for the DIABLO SUPERCORSA SP motorcycle according to Fig. 1, containing a layer 10 of elastomeric material of thickness 0.35 mm according to sample 1 (comparison) and according to sample 2 (invention) interposed between the carcass layer 2 and the belt layer 5.

The DIABLO SUPERCORSA SP tyres thus prepared, with size 190/55 ZR17, were then mounted on a YAMAHA R1 motorcycle and tested on a racing circuit. The results obtained are presented in Table 3.

For evaluating tyre behaviour, the tester simulated some typical manoeuvres (for example, lane changing, going into a bend, coming out of a bend). Then the tester assessed tyre behaviour and awarded a score in relation to tyre performance during said manoeuvre.

The tests were conducted in extreme driving conditions that describe the behaviour of the tyre at the limit of grip. Then the tester carried out manoeuvres that an average driver might be forced to execute in unexpected and dangerous circumstances: sudden swerving at high speed, sudden lane changing to avoid obstacles, sudden braking and the like.

The tester assessed various types of behaviour particularly indicative of rear tyre performance, for example stability in various conditions, driving accuracy, and thrust.

Table 3 summarizes the tester's score sheet for the controllability of the tyres. The results of these tests are expressed by means of an assessment scale that represents the subjective opinion expressed by the tester by means of a points system. The values reproduced in the following table represent a mean value from those obtained in several test sessions (5-6 tests, for example) and supplied by several testers. It should be noted that the scale of values ranges from a minimum of 1 to a maximum of 5.

**TABLE 3**

| TYRE SAMPLE | 1 (*) | 2 |
|---|---|---|
| Stability during acceleration | 3.65 | 4.00 |
| Stability in a straight line | 3.75 | 4.00 |
| Stability when cornering | 3.55 | 4.00 |
| Pudding ⁽¹⁾ | 3.65 | 4.00 |
| Thrust | 3.35 | 3.85 |
| Uniformity of thrust | 3.55 | 4.00 |
| Promptness | 3.75 | 4.00 |
| Transient | 3.75 | 4.00 |
| Flip Flop ⁽²⁾ | 3.75 | 4.00 |
| Driving accuracy | 3.55 | 4.00 |
| Warm Up Optimization⁽³⁾ | 4.35 | 4.35 |
| Rear Grip | 4.35 | 4.35 |
| Front Grip | 4.15 | 4.15 |

| | | |
|---|---|---|
| (*): comparison (1): perception of tyre compactness and solidity (2): perception of stability in a double bend in opposite directions (leaning and straightening up from leaning) (3): speed of reaching the optimum working temperature | | |

The results given in Table 3 clearly demonstrate that the tyre according to the present invention (Sample 2), despite comprising a layer interposed between the carcass structure and the belt structure obtained with an elastomeric material having an appreciable Payne effect, had better behaviour than the comparison tyre (Sample 1), in particular displaying improved performance on all aspects indicative of rear stability and, more generally, of the driving stability of the motorcycle.

The compound with sepiolite instead of the compound with Kevlar shows a significant improvement on all aspects indicative of stability of the rear section of the motorcycle.

## Claims

1. Tire (100) for motorcycle wheels comprising:
- a carcass structure comprising at least one carcass layer (2);
- a belt structure (5) applied in a radially outer position with respect to said carcass structure;
- a tread band (6) applied in a radially outer position with respect to said belt structure;
- at least one elastomeric material layer (10) arranged between said carcass structure (2) and said belt structure (5);
wherein said elastomeric material comprises magnesium and/or aluminium silicates inorganic fibres, said fibres having nanometric dimensions.

2. Tire for motorcycle wheels according to claim 1, wherein said elastomeric material comprises (a) a diene elastomeric polymer.

3. Tire for motorcycle wheels according to claim 1, wherein said elastomeric material comprises (b) magnesium and/or aluminium silicates inorganic fibres having an average diameter of less than 500 nm.

4. Tire for motorcycle wheels according to claim 1, wherein said elastomeric material comprises (b) magnesium and/or aluminium silicates inorganic fibres having an average diameter of less than 100 nm.

5. Tire for motorcycle wheels according to claim 4, wherein said elastomeric material comprises (b) magnesium and/or aluminium silicates inorganic fibres having an average diameter of from 5 to 50 nm.

6. Tire for motorcycle wheels according to claim 1, wherein said elastomeric material comprises (b) magnesium and/or aluminium silicates inorganic fibres having a length less than or equal to 10 µm.

7. Tire for motorcycle wheels according to claim 6, wherein said elastomeric material comprises (b) magnesium and/or aluminium silicates inorganic fibres having a length of from 0.2 to 10 µm.

8. Tire for motorcycle wheels according to anyone of the preceding claims, wherein said inorganic fibres are selected from the group consisting of sepiolite fibres, palygorskite fibres or mixtures thereof.

9. Tire for motorcycle wheels according to claim 8, wherein said inorganic fibres are sepiolite fibres.

10. Tire for motorcycle wheels according to anyone of the preceding claims, wherein said inorganic fibres are present in the elastomeric material in an amount of from 1 phr to 20 phr.

11. Tire for motorcycle wheels according to claim 10, wherein said inorganic fibres are present in the elastomeric material in an amount of from 3 phr to 15 phr.

12. Tire for motorcycle wheels according to anyone of the preceding claims, wherein said at least one elastomeric material layer (10) has a thickness of less than 2 mm.

13. Tire for motorcycle wheels according to claim 12, wherein said at least one elastomeric material layer (10) has a thickness of from 0.1 mm to 0.5 mm.

14. Tire for motorcycle wheels according to claim 12, wherein said at least one elastomeric material layer (10) has a uniform thickness.

15. Tire for motorcycle wheels according to anyone of the preceding claims, said tire having a transverse curvature ratio (f/C) equal to or higher than 0.20.

16. Tire for motorcycle wheels according to claim 15, said tire being intended for equipping the rear wheel and having a transverse curvature ratio (f/C) ranging from 0.25 to 0.35.

17. Tire for motorcycle wheels according to claim 15, said tire being intended for equipping the front wheel and having a transverse curvature ratio (f/C) ranging from 0.35 to 0.70.

18. Tire for motorcycle wheels according to anyone of the preceding claims, wherein said tire comprises at least one supplemental layer of said elastomeric material arranged between said tread band (6) and said belt structure (5).

19. Tire for motorcycle wheels according to anyone of the preceding claims, wherein said belt structure comprises rubber-coated cords, arranged substantially parallel and side-by-side to form a plurality of coils substantially oriented according a circumferential direction of the tire.

20. Tire for motorcycle wheels according to anyone of the preceding claims, wherein at least one additional reinforcing filler is present in the elastomeric material in an amount of from 0.1 phr to 120 phr.

21. Tire for motorcycle wheels according to claim 20, wherein said reinforcing filler is silica.

## Patentansprüche

1. Reifen (100) für Motorradräder, umfassend:
- eine Karkassenstruktur, die zumindest eine Karkassenschicht (2) umfasst;
- eine Gürtelstruktur (5), die in einer radial äußeren Position bezüglich der Karkassenstruktur aufgebracht ist;
- ein Laufflächenband (6), das in einer radial äußeren Position bezüglich der Gürtelstruktur aufgebracht ist;
- zumindest eine Elastomermaterialschicht (10), die zwischen der Karkassenstruktur (2) und der Gürtelstruktur (5) angeordnet ist;
wobei das Elastomermaterial anorganische Magnesium- und/oder Aluminiumsilicatfasern umfasst, wobei die Fasern Nanometerabmessungen aufweisen.

2. Reifen für Motorradräder nach Anspruch 1, wobei das Elastomermaterial (a) ein Dienelastomerpolymer umfasst.

3. Reifen für Motorradräder nach Anspruch 1, wobei das Elastomermaterial (b) anorganische Magnesium- und/oder Aluminiumsilicatfasern mit einem Durchmesser von unter 500 nm umfasst.

4. Reifen für Motorradräder nach Anspruch 1, wobei das Elastomermaterial (b) anorganische Magnesium- und/oder Aluminiumsilicatfasern mit einem mittleren Durchmesser von unter 100 nm umfasst.

5. Reifen für Motorradräder nach Anspruch 4, wobei das Elastomermaterial (b) anorganische Magnesium- und/oder Aluminiumsilicatfasern mit einem mittleren Durchmesser von 5 bis 50 nm umfasst.

6. Reifen für Motorradräder nach Anspruch 1, wobei das Elastomermaterial (b) anorganische Magnesium- und/oder Aluminiumsilicatfasern mit einer Länge unter oder gleich 10 µm umfasst.

7. Reifen für Motorradräder nach Anspruch 6, wobei das Elastomermaterial (b) anorganische Magnesium- und/oder Aluminiumsilicatfasern mit einer Länge von 0,2 bis 10 µm umfasst.

8. Reifen für Motorradräder nach einem der vorhergehenden Ansprüche, wobei die anorganischen Fasern aus der Gruppe ausgewählt sind, die aus Sepiolithfasern, Attapulgitfasern oder Mischungen davon besteht.

9. Reifen für Motorradräder nach Anspruch 8, wobei die anorganischen Fasern Sepiolithfasern sind.

10. Reifen für Motorradräder nach einem der vorhergehenden Ansprüche, wobei die anorganischen Fasern in einer Menge von 1 phr bis 20 phr im Elastomermaterial vorhanden sind.

11. Reifen für Motorradräder nach Anspruch 10, wobei die anorganischen Fasern in einer Menge von 3 phr bis 15 phr im Elastomermaterial vorhanden sind.

12. Reifen für Motorradräder nach einem der vorhergehenden Ansprüche, wobei die zumindest eine Elastomermaterialschicht (10) eine Stärke von unter 2 mm aufweist.

13. Reifen für Motorradräder nach Anspruch 12, wobei die zumindest eine Elastomermaterialschicht (10) eine Stärke von unter 0,1 mm bis 0,5 mm aufweist.

14. Reifen für Motorradräder nach Anspruch 12, wobei die zumindest eine Elastomermaterialschicht (10) eine einheitliche Stärke aufweist.

15. Reifen für Motorradräder nach einem der vorhergehenden Ansprüche, wobei der Reifen ein Querkrümmungsverhältnis (f/C) gleich oder über 0,20 aufweist.

16. Reifen für Motorradräder nach Anspruch 15, wobei der Reifen zum Ausrüsten des Hinterrads ausgelegt ist und ein Querkrümmungsverhältnis (f/C) im Bereich von 0,25 bis 0,35 aufweist.

17. Reifen für Motorradräder nach Anspruch 15, wobei der Reifen zum Ausrüsten des Vorderrads ausgelegt ist und ein Querkrümmungsverhältnis (f/C) im Bereich von 0,35 bis 0,70 aufweist.

18. Reifen für Motorradräder nach einem der vorhergehenden Ansprüche, wobei der Reifen zumindest eine Ergänzungsschicht aus dem Elastomermaterial umfasst, die zwischen dem Laufflächenband (6) und der Gürtelstruktur (5) angeordnet ist.

19. Reifen für Motorradräder nach einem der vorhergehenden Ansprüche, wobei die Gürtelstruktur kautschukbeschichtete Corde umfasst, die im Wesentlichen parallel und Seite an Seite zum Ausbilden von mehreren Wicklungen angeordnet sind, welche im Wesentlichen gemäß einer Umfangsrichtung des Reifens ausgerichtet sind.

20. Reifen für Motorradräder nach einem der vorhergehenden Ansprüche, wobei zumindest ein zusätzlicher Verstärkungsfüllstoff in einer Menge von 0,1 phr bis 120 phr im Elastomermaterial vorhanden ist.

21. Reifen für Motorradräder nach Anspruch 20, wobei der zusätzliche Verstärkungsfüllstoff Siliciumdioxid ist.

## Revendications

1. Pneu (100) pour roues de motocycle comprenant :
- une structure de carcasse comprenant au moins une couche de carcasse (2) ;
- une structure de ceinture (5) appliquée dans une position radialement extérieure par rapport à ladite structure de carcasse ;
- une bande de roulement (6) appliquée dans une position radialement extérieure par rapport à ladite structure de ceinture ;
- au moins une couche de matériau élastomère (10) agencée entre ladite structure de carcasse (2) et ladite structure de ceinture (5) ;
dans lequel ledit matériau élastomère comprend des fibres inorganiques de silicates de magnésium et/ou d'aluminium, lesdites fibres ayant des dimensions nanométriques.

2. Pneu pour roues de motocycle selon la revendication 1, dans lequel ledit matériau élastomère comprend (a) un polymère élastomère diène.

3. Pneu pour roues de motocycle selon la revendication 1, dans lequel ledit matériau élastomère comprend (b) des fibres inorganiques de silicates de magnésium et/ou d'aluminium ayant un diamètre moyen inférieur à 500 nm.

4. Pneu pour roues de motocycle selon la revendication 1, dans lequel ledit matériau élastomère comprend (b) des fibres inorganiques de silicates de magnésium et/ou d'aluminium ayant un diamètre moyen inférieur à 100 nm.

5. Pneu pour roues de motocycle selon la revendication 4, dans lequel ledit matériau élastomère comprend (b) des fibres inorganiques de silicates de magnésium et/ou d'aluminium ayant un diamètre moyen allant de 5 à 50 nm.

6. Pneu pour roues de motocycle selon la revendication 1, dans lequel ledit matériau élastomère comprend (b) des fibres inorganiques de silicates de magnésium et/ou d'aluminium ayant une longueur inférieure ou égale à 10 µm.

7. Pneu pour roues de motocycle selon la revendication 6, dans lequel ledit matériau élastomère comprend (b) des fibres inorganiques de silicates de magnésium et/ou d'aluminium ayant une longueur allant de 0,2 à 10 µm.

8. Pneu pour roues de motocycle selon l'une quelconque des revendications précédentes, dans lequel lesdites fibres inorganiques sont choisies dans le groupe constitué de fibres de sépiolite, de fibres de palygorskite ou de mélanges de celles-ci.

9. Pneu pour roues de motocycle selon la revendication 8, dans lequel lesdites fibres inorganiques sont des fibres de sépiolite.

10. Pneu pour roues de motocycle selon l'une quelconque des revendications précédentes, dans lequel lesdites fibres inorganiques sont présentes dans le matériau élastomère en une quantité allant de 1 phr à 20 phr.

11. Pneu pour roues de motocycle selon la revendication 10, dans lequel lesdites fibres inorganiques sont présentes dans le matériau élastomère en une quantité allant de 3 phr à 15 phr.

12. Pneu pour roues de motocycle selon l'une quelconque des revendications précédentes, dans lequel ladite au moins une couche de matériau élastomère (10) a une épaisseur inférieure à 2 mm.

13. Pneu pour roues de motocycle selon la revendication 12, dans lequel ladite au moins une couche de matériau élastomère (10) a une épaisseur allant de 0,1 mm à 0,5 mm.

14. Pneu pour roues de motocycle selon la revendication 12, dans lequel ladite au moins une couche de matériau élastomère (10) a une épaisseur uniforme.

15. Pneu pour roues de motocycle selon l'une quelconque des revendications précédentes, ledit pneu ayant un rapport de courbure transversale (f/C) supérieur ou égal à 0,20.

16. Pneu pour roues de motocycle selon la revendication 15, ledit pneu étant destiné à équiper la roue arrière et ayant un rapport de courbure transversale (f/C) se trouvant dans la plage allant de 0,25 à 0,35.

17. Pneu pour roues de motocycle selon la revendication 15, ledit pneu étant destiné à équiper la roue avant et ayant un rapport de courbure transversale (f/C) se trouvant dans la plage allant de 0,35 à 0,70.

18. Pneu pour roues de motocycle selon l'une quelconque des revendications précédentes, dans lequel ledit pneu comprend au moins une couche supplémentaire dudit matériau élastomère agencée entre ladite bande de roulement (6) et ladite structure de ceinture (5).

19. Pneu pour roues de motocycle selon l'une quelconque des revendications précédentes, dans lequel ladite structure de ceinture comprend des câblés revêtus de caoutchouc, agencés de manière essentiellement parallèle et côte-à-côte de façon à former une pluralité de bobines essentiellement orientées selon une direction circonférentielle du pneu.

20. Pneu pour roues de motocycle selon l'une quelconque des revendications précédentes, dans lequel au moins une charge renforçante additionnelle est présente dans le matériau élastomère en une quantité allant de 0,1 phr à 120 phr.

21. Pneu pour roues de motocycle selon la revendication 20, dans lequel ladite charge renforçante est de la silice.
